# EUROPÄISCHE PATENTSCHRIFT

(11) **EP 4 515 134 B1**
(45) Veröffentlichungstag und Bekanntmachung des Hinweises auf die Patenterteilung: **11.03.2026**
(21) Anmeldenummer: 23729305.5
(22) Anmeldetag: 16.05.2023
(51) Int. Cl.: F16L 41/00, G01L 19/00

(54) **EINSCHWEISSADAPTER ZUR VERBINDUNG EINES SENSORS ODER AKTORS MIT EINEM BEHÄLTER SOWIE ANORDNUNG MIT EINEM SOLCHEN EINSCHWEISSADAPTER**
WELD-IN ADAPTER FOR CONNECTING A SENSOR OR ACTUATOR TO A CONTAINER, AND ASSEMBLY COMPRISING A WELD-IN ADAPTER OF THIS TYPE
ADAPTATEUR À SOUDURE POUR RELIER UN CAPTEUR OU UN ACTIONNEUR À UN CONTENANT, ET ENSEMBLE COMPRENANT UN ADAPTATEUR À SOUDURE DE CE TYPE

(30) Priorität: 02.06.2022 DE 102022113936
(43) Veröffentlichungstag der Anmeldung: 05.03.2025
(73) Patentinhaber: ifm electronic gmbh, 45128 Essen (DE)
(72) Erfinder: HALBINGER, Lorenz, 88353 Kißlegg (DE)
(74) Vertreter: Ifm Patentabteilung
(86) Internationale Anmeldenummer: PCT/EP2023/063086
(87) Internationale Veröffentlichungsnummer: WO 2023/232457

(56) Entgegenhaltungen:
- EP-A2- 2 270 320
- DE-A1- 102019 126 381
- DE-A1- 102020 113 929
- US-A- 6 059 254
- US-A1- 2016 025 575

## Beschreibung

Die Erfindung betrifft einen Einschweißadapter zur Verbindung eines Sensors oder Aktors mit einem ein Medium beinhaltenden Behälter nach dem Oberbegriff des Anspruchs 1 sowie eine Anordnung aus einem Sensor oder Aktor und einem Behälter mit Einschweißadapter nach dem Oberbegriff des Anspruchs 8.

Einschweißadapter sind an sich hinlänglich bekannt. Vor allem in der Prozessmesstechnik haben sich Einschweißadapter bewährt, um diverse Sensoren bzw. Messgeräte zum Erfassen von Druck, Temperatur, Strömung, Füllstände usw. aber auch Aktoren in bzw. an einem Behälter, wie bspw. einer Rohrleitung oder eines Tanks zu befestigen.

Eine Anforderung besteht darin, die Sensoren und Aktoren dergestalt in den Behälter einzubringen, dass das jeweilige Gerät, also der Sensor oder Aktor, einen harmonischen Übergang mit der Innenwandung des Behälters aufweist und es im Schadens- oder Reparaturfalle dennoch zu Service- oder Austauschzwecken entnommen werden kann. Dazu werden insbesondere in der Prozessindustrie Einschweißadapter verwendet, die vorzugsweise als quasi scheibenartige Bauteile ausgeformt sind und die eine Durchgangsöffnung aufweisen, in die ein zumeist zylindrischer bzw. rotationssymmetrischer Sensor oder Aktor mit seiner Stirnseite eingeschraubt oder eingeklemmt wird. Die Befestigung des Sensors/Aktors in dem Einschweißadapter erfolgt zumeist über ein Gewinde oder eine rückseitige Klemmung mit Überwurfschraube, Lochplatte oder eine Klammer.

Typischerweise muss beim Einbau des Sensors/Aktors auf eine dichte Verbindung zwischen Sensor/Aktor und dem Einschweißadapter geachtet werden. Hierfür weist der Einschweißadapter am prozess- bzw. mediumsseitigen Ende der Durchgangsöffnung eine Dichtkante in Form einer Verjüngung der Durchgangsöffnung auf, die eine dort befindliche Dichtung, vorzugsweise ein O-Ring, verpresst.

Verständlicherweise muss der Sensor oder Aktor in die Durchgangsöffnung innerhalb festgelegter und sehr eng gesetzter Toleranzen eingeführt werden, um die geforderte Dichtigkeit und Funktionalität unter den vorgegebenen Rahmenbedingungen zu gewährleisten. Deshalb stellt der Schweißvorgang beim Einbau des Adapters in die Wandung des Behälters eine besondere Herausforderung dar, insofern die Fügeteile an der Schweißstelle aufgeschmolzen werden und dadurch extreme thermische Einflüsse auf die Fügepartner einwirken. Hierdurch können sich massive lokale Spannungsherde ausbreiten, die von der Schweißnaht her auf diese Bauteile Fügepartner übertragen bzw. in diese eingebracht werden. Ob überhaupt und in welchem Ausmaß diese Spannungen zu partiellen Deformationen der Fügepartner führen, hängt unter anderem von deren Materialen, der inneren Spannung in den Bauteilen (durch eine mögliche Vorverformung), der Ausführung der Schweißnaht (z.B. gepulst oder ungepulst), vom eingestellten Schweißstrom, der eingebrachten Energie, dem zugegebenen Schweißmaterial, der Geschwindigkeit und dem Schweißverfahren an sich ebenso wie vielen weiteren Einflussfaktoren ab, die vom Hersteller bzw. dem Lieferanten der beiden Bauteile zumeist nicht vorausgesehen geschweige denn vor Ort beeinflusst werden können.

Die DE 10 2019 126381 A1 offenbart eine hygienegerechte Adapterlösung für Feldgeräte, insbesondere zur Vermeidung von Toträumen und zur einfachen Reinigung. Die Lösung besteht hierbei aus einem zweiteiligen Adapter mit einem Verbindungsadapter und einem Behälteradapter.

Die US 2016/025575 A1 offenbart einen Adapter zur Messung einer physikalischen Variablen, bei dem ein Temperaturunterschied zwischen einem Schutzrohr für einen Temperatursensor und einer Flanschplatte zur Herstellung einer dichtenden Presspassung genutzt wird.

Die DE 10 2020 113929 A1 offenbart einen Rohrabschnitt eines Messrohrs mit einer längsgestreckten Aussparung und einer Einbauvorrichtung, die als Adapter mit einer Durchgangsbohrung ausgeführt ist. Die Unterseite des Adapters weist eine teilzylindrische Ausnehmung auf.

Die US 6059254 A offenbart eine Montagevorrichtung für Prozessinstrumente. Die Vorrichtung besteht aus einem äußeren und einem inneren Gehäuse, die durch einen Zwischenraum getrennt sind. Der Zwischenraum dient der thermischen Entkopplung des Instruments vom Prozess, um die Genauigkeit der Messung zu verbessern und die Auswirkungen von Temperaturschwankungen zu minimieren. Die Montagevorrichtung soll die Auswirkungen von Wärmeverzug und Vibrationen reduzieren.

Die EP 2 270 320 A2 beschreibt einen Sondenstutzen für eine Messsonde, der einstückig aus einem Blech gefertigt ist. Der Stutzen besteht aus einer Innenhülse zur Aufnahme der Messsonde und einer Außenhülse zur Befestigung, die durch einen Verbindungssteg verbunden und radial beabstandet sind. Ein ringförmiger Freiraum zwischen Innen- und Außenhülse soll den Wärmeverzug der Innenhülse beim Anschweißen der Außenhülse weitgehend vermeiden.

Aufgabe der Erfindung ist es, den Einbau eines Einschweißadapters in die Wandung eines Behälters dahingehend zu vereinfachen, dass der aufgrund des Schweißvorgangs einwirkende thermische Einfluss auf die Dichtigkeit der Verbindung zwischen dem Einschweißadapter und einem in ihn eingeführten Sensor oder Aktor auch unter Worst-Case-Bedingungen beim Schweißvorgang verringert bzw. ganz ausgeschlossen wird.

Diese Aufgabe wird erfindungsgemäß gelöst mit einem Einschweißadapter mit den Merkmalen des Anspruchs 1 sowie einer Anordnung mit den Merkmalen des Anspruchs 8. Vorteilhafte Ausgestaltungen der Erfindung sind in den Unteransprüchen angegeben.

Kern der Erfindung ist die Erkenntnis, dass zur Kompensation der thermischen Einflüsse infolge des Schweißvorgangs die dem Medium zugewandte Dichtkante des Einschweißadapters und damit die medienseitige Stirnfläche des Sensors bzw. Aktors gegenüber dem äußeren Randbereich des Einschweißadapters, wo die Schweißverbindung hergestellt wird, um einen Abstand zueinander parallel versetzt ist. D.h. die Dichtkante des Einschweißadapters und damit die Stirnfläche des Sensors bzw. Aktors ist gegenüber der Innenseite des Behälters vorstehend oder zurückversetzt, jedenfalls nicht koplanar zueinander. Entscheidend ist darüber hinaus, dass zum Ausgleich dieses Parallelversatzes der Übergangsbereich des Einschweißadapters, der sich als Verbindungselement zwischen dem äußeren Randbereich und der Dichtkante befindet, eine gewölbte Struktur mit einem Anstellwinkel α aufweist.

Durch diese gewölbte Struktur ergeben sich funktional gesehen gewissermaßen mehrere Gelenke, wodurch der Übergangsbereich dann eine gewisse Flexibilität aufweist, so dass sich bei einem starken thermischen Einfluss die daraus resultierenden Druck- oder Zugkräfte in dem Einschweißadapter eine Änderung des Anstellwinkels α zur Folge haben. Entsprechend verändert sich dann der Abstand zwischen der Dichtkante des Einschweißadapters und dem äußeren Randbereich des Einschweißadapters, wo die Schweißverbindung hergestellt wird. Die in der Behälterwandung horizontal wirkenden Kräfte werden durch diesen erfindungsgemäßen Aufbau um 90° vertikal umgeleitet, wo sie sich in einem - messtechnisch gesehen - vollkommen unkritischen Bereich ableiten können. Im Ergebnis werden durch diese Bewegung auf einfache Weise eintretende mechanische Spannungen derart abgeleitet, dass sie messtechnisch gesehen keine funktionellen Beeinträchtigungen darstellen, während die Verbindungsstelle zwischen Einschweißadapter und Sensor/Aktor mechanisch entlastet und entkoppelt wird. Im Fokus steht dabei insbesondere die Dichtkante und die Gewindeverbindung zwischen dem Sensor/Aktor und dem Einschweißadapter.

Bevorzugt weist der Übergangsbereich im Bereich der gewölbten Struktur eine geringere Wandstärke auf als an seinem äußeren Randbereich. Dadurch lässt sich die Flexibilität des Übergangsbereichs und damit die gewünschte Beweglichkeit während der thermischen Beanspruchung optimieren.

Bevorzugt ist der Anstellwinkel α bei der erhabenen Ausführungsform so groß gewählt, dass die Gelenkfunktionalität und damit die Kompensationswirkung jeweils optimal ist. Ein Optimum zwischen notwendiger Beweglichkeit während des Einschweißvorgangs bei gleichzeitig gebotener Stabilität und Steifigkeit hat sich bei einem Winkel zwischen 30° und 40°, besonders bevorzugt zwischen 32° und 36° bei der Ausführung, bei die Dichtkante gegenüber dem äußeren Randbereich bzw. der Behälterinnenseite vorsteht, und zwischen 40° und 50°, besonders bevorzugt 45° bei der Ausführung, bei die Dichtkante gegenüber der äußerer Randbereich bzw. der Behälterinnenseite zurückversetzt ist, eingestellt, wobei die Erfindung jedoch nicht auf diese Angaben beschränkt ist.

Weiter bevorzugt ist vorgesehen, dass der Einschweißadapter für den frontbündigen Einbau des Sensors oder Aktors geeignet ist.

Nachfolgend wird die Erfindung anhand von Ausführungsbeispielen unter Bezugnahme auf die Zeichnungen näher erläutert.

Es zeigen schematisch:
- Figur 1: einen Behälter in Form eines Tanks mit einem Sensor;
- Figur 2: ein Schnittbild eines erfindungsgemäßen Einschweißadapters gemäß einer ersten Ausführungsform mit Sensor in eine Behälterwandung eingebaut;
- Figur 3: perspektivische Darstellung eines erfindungsgemäßen Einschweißadapters gemäß Fig. 2;
- Figur 4: ein Schnittbild eines erfindungsgemäßen Einschweißadapters gemäß einer zweiten Ausführungsform mit Sensor in eine Behälterwandung eingebaut und
- Figur 5: perspektivische Darstellung eines erfindungsgemäßen Einschweißadapters gemäß Fig. 4.

Bei der nachfolgenden Beschreibung der bevorzugten Ausführungsformen bezeichnen gleiche Bezugszeichen gleiche oder vergleichbare Komponenten.

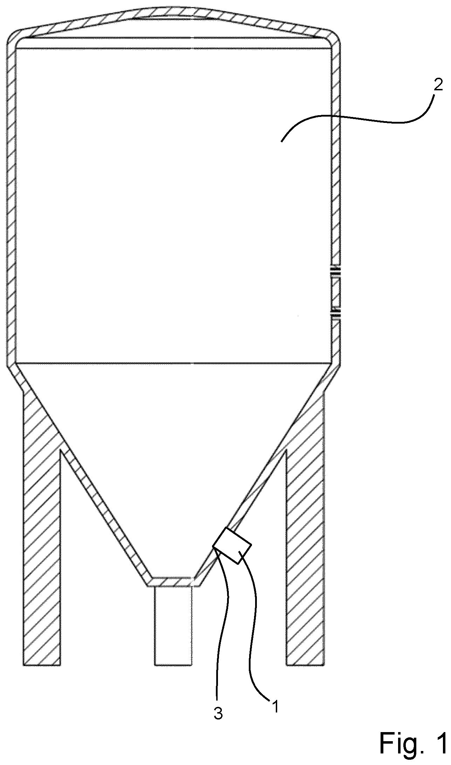

Figur 1 zeigt sehr schematisch, wie ein Sensor 1 mittels eines Einschweißadapters 3 in bzw. an einem Behälter 2 angeordnet ist. Der Behälter 2 ist vorliegend in Form eines Tanks dargestellt. Selbstverständlich kommen dabei alle möglichen Behälterformen inklusive Rohrleitungen in Frage, wie sie in der Prozess- und Verfahrenstechnik üblich sind. Der Sensor 1 ist in diesem Ausführungsbeispiel als Drucksensor ausgeführt, der für die Erfassung des hydrostatischen Drucks zur Ermittlung des Füllstands in dem Tank vorgesehen ist.

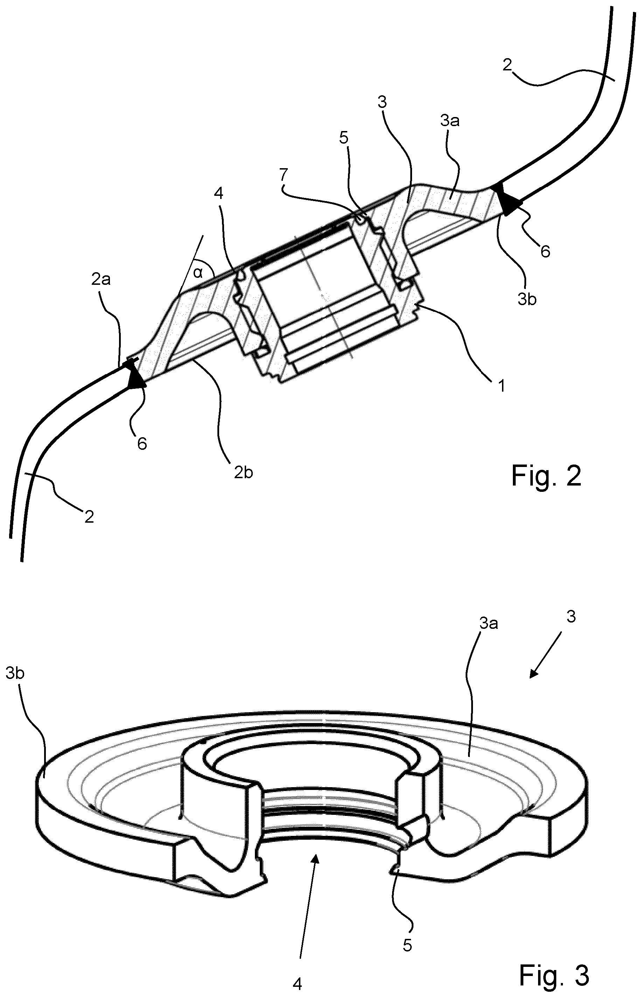

In Figur 2 und Figur 3 ist jeweils der erfindungsgemäße Einschweißadapter 3 gemäß einer ersten Ausführungsform dargestellt, die dadurch gekennzeichnet ist, dass die Dichtkante 5 gegenüber einem äußeren Randbereich 3b des flexiblen Übergangsbereichs 3a bzw. der Behälterinnenseite 2a vorsteht. Fig. 2 zeigt schematisch, wie dieser Einschweißadapter 3 in die Wandung des Behälter 2 eingebaut ist.

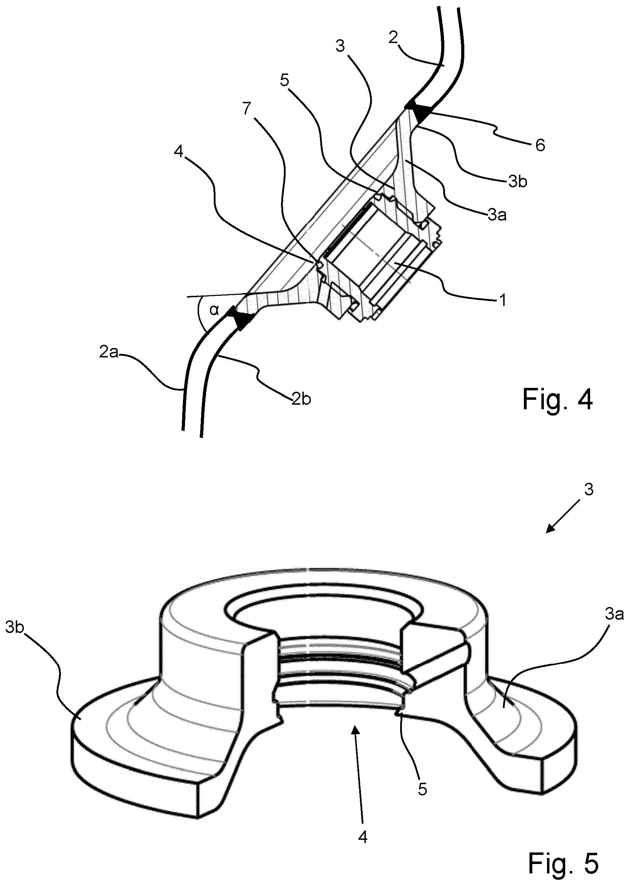

In Figur 4 und Figur 5 ist jeweils der erfindungsgemäße Einschweißadapter 3 gemäß einer zweiten Ausführungsform dargestellt, die dadurch gekennzeichnet ist, dass die Dichtkante 5 gegenüber dem äußeren Randbereich 3b des flexiblen Übergangsbereichs 3a bzw. der Behälterinnenseite 2a zurückversetzt ist. Fig. 4 zeigt schematisch, wie dieser Einschweißadapter 3 in die Wandung des Behälter 2 eingebaut ist.

Da sich ansonsten alle wesentlichen Elemente in beiden Ausführungsformen ähneln, bezieht sich die nachfolgende Beschreibung jeweils auf alle vier Figuren 2 bis 5.

Der Einschweißadapter 3 weist zunächst eine Durchgangsöffnung 4 auf, in die ein Sensor 1 eingeschraubt ist. Vorliegend ist der Sensor 1 nicht in Gänze dargestellt, sondern nur der Prozessanschluss, der im Falle eines Drucksensors die Druckmesszelle beinhaltet und durch den der Sensor 1 mit dem Einschweißadapter 3 fest verbunden wird. In den dargestellten Ausführungsformen ist der Sensor 1 frontbündig in den Einschweißadapter 3 eingebaut.

Am prozess- bzw. mediumsseitigen Ende der Durchgangsöffnung 4 ist eine Dichtkante 5 in Form einer Verjüngung der Durchgangsöffnung 4 angeordnet. Grundsätzlich sind viele Dichtkonzepte bekannt und deren Umsetzung denkbar. Vorliegend ist dargestellt, dass der Sensor 1 bzw. sein Prozessanschluss an der vorderen, der Behälterinnenseite 2a zugewandten Ecke eine umlaufende Nut aufweist, in der eine Dichtung 7, vorzugsweise ein O-Ring, eingesetzt ist. Dem gegenüber weist der Einschweißadapter 3 die besage Dichtkante 5 auf, wodurch der O-Ring während des Einschraubvorgangs des Sensors 1 in den Einschweißadapter 3 verpresst wird und dadurch eine zuverlässige Abdichtung zwischen beiden Teilen hergestellt werden kann.

Konzentrisch um die Dichtkante 5 herum ist der flexible Übergangsbereich 3a angeordnet, dessen äußerer Randbereich 3b mit dem Behälter 2 mittels einer Schweißverbindung 6 verbunden ist.

Erfindungswesentliches Merkmal des Einschweißadapters 3 ist, dass die dem Medium zugewandte Dichtkante 5 des Einschweißadapters 3 und damit die medienseitige Stirnfläche des Sensors 1 bzw. Aktors gegenüber dem äußeren Randbereich 3b des Einschweißadapters 3, wo die Schweißverbindung 6 hergestellt wird, um einen Abstand zueinander parallel versetzt ist. Zum Ausgleich dieses Parallelversatzes weist der flexible Übergangsbereich 3a des Einschweißadapters 3, der sich als Verbindungselement zwischen der äußeren Umfangsseite 3b und der Dichtkante 5 befindet, eine gewölbte Struktur mit einem Anstellwinkel α auf. Durch diese gewölbte Struktur ergeben sich funktional gesehen gewissermaßen mehrere Gelenke, so dass sich bei einem starken thermischen Einfluss infolge eines Schweißvorgangs die daraus resultierenden Druck- oder Zugkräfte in der Behälterwandung eine Änderung des Anstellwinkels α zur Folge haben. Entsprechend verändert sich dann der Abstand zwischen der Dichtkante 5 des Einschweißadapters 3 und der Behälterinnenseite 2a. Durch diese Bewegung werden eintretende mechanische Spannungen sozusagen in eine Auf- oder Abwärtsbewegung des Sensors 1 umgeleitet und der sensible Dichtungsbereich sowie die Gewindeverbindung zwischen dem Sensor 1 bzw. Aktor und dem Einschweißadapter 3 wird entlastet und entkoppelt.

Vorteilhafterweise ist bei der Ausführungsform in Fig. 2 der Anstellwinkel α so groß gewählt, dass die Gelenkfunktionalität und damit die Kompensationswirkung jeweils optimal ist und sich damit ein Optimum zwischen notwendiger Beweglichkeit während des Einschweißvorgangs bei gleichzeitig gebotener Stabilität und Steifigkeit einstellt. Ein vorteilhafter Wert liegt bei der Ausführungsform gemäß Fig. 2 und 3, wenn der Parallelversatz zwischen Dichtkante 5 und Randbereich 3b etwa 6-7 mm beträgt, zwischen 30° und 40°, besonders bevorzugt zwischen 32° und 36°, und bei der Ausführung gemäß Fig. 4 und 5, wenn der Parallelversatz zwischen Dichtkante 5 und Randbereich 3b etwa 4-5 mm beträgt, zwischen 40° und 50°, besonders bevorzugt bei 45°, wobei die Erfindung jedoch nicht auf diese Angaben beschränkt ist.

### Bezugszeichenliste

- 1: Sensor
- 2: Behälter
- 2a: Behälterinnenseite
- 2b: Behälteraußenseite
- 3: Einschweißadapter
- 3a: Übergangsbereich
- 3b: äußerer Randbereich des Übergangsbereichs
- 4: Durchgangsöffnung
- 5: Dichtkante
- 6: Schweißstelle
- 7: Dichtung

## Patentansprüche

1. Einschweißadapter zur Verbindung eines Sensors (1) oder Aktors mit einem ein Medium beinhaltenden Behälter (2), mit einer zylindrischen Durchgangsöffnung (4) zur Aufnahme des Sensors (1) oder Aktors und einem sich konzentrisch um die Durchgangsöffnung (4) herum angeordneten Übergangsbereich (3a), dessen äußerer Randbereich (3b) zum Verschweißen (6) mit dem Behälter (2) geeignet ist,
wobei die Durchgangsöffnung (4) an einem Ende eine umlaufende, die Durchgangsöffnung (4) verjüngende Dichtkante (5) aufweist, die als Teil eines Dichtkonzepts für die mediendichte Verbindung des Sensors (1) oder Aktors mit dem Einschweißadapter (3) geeignet ist,
**dadurch gekennzeichnet,**
**dass** die Dichtkante (5) zu dem äußeren Randbereich (3b) des Übergangsbereichs (3a) parallel ist,
die Dichtkante (5) gegenüber dem äußeren Randbereich (3b) des Übergangsbereichs (3a) um einen Abstand versetzt ist und der Übergangsbereich (3a), der sich als Verbindungselement zwischen dem äußeren Randbereich (3b) und der Dichtkante (5) befindet, zum Ausgleich dieses Versatzes eine gewölbte Struktur mit einem Anstellwinkel α aufweist.

2. Einschweißadapter nach Anspruch 1,
**dadurch gekennzeichnet, dass** die Dichtkante (5) gegenüber dem äußeren Randbereich (3b) des Übergangsbereichs (3a) vorsteht.

3. Einschweißadapter nach Anspruch 1,
**dadurch gekennzeichnet, dass** die Dichtkante (5) gegenüber dem äußeren Randbereich (3b) des Übergangsbereichs (3a) zurückversetzt ist.

4. Einschweißadapter nach einem der vorhergehenden Ansprüche,
**dadurch gekennzeichnet, dass** der Übergangsbereich (3a) im Bereich der gewölbten Struktur eine geringere Wandstärke aufweist als an seinem äußeren Randbereich (3b).

5. Einschweißadapter nach einem der vorhergehenden Ansprüche, **dadurch gekennzeichnet, dass** der Einschweißadapter (3) für den frontbündigen Einbau des Sensors (1) oder Aktors geeignet ist.

6. Einschweißadapter nach einem der vorhergehenden Ansprüche, **dadurch gekennzeichnet, dass** der Anstellwinkel α zwischen 30° und 50° beträgt.

7. Einschweißadapter nach einem der vorhergehenden Ansprüche,
**dadurch gekennzeichnet, dass** die der Behälterinnenseite (2a) zugewandte Seite eine Oberflächenstruktur aufweist, die den Einsatz des Einschweißadapters (3) bei Hygieneanwendungen ermöglicht.

8. Anordnung aus einem Sensor (1) oder Aktor und einem ein Medium beinhaltenden Behälter (2), wobei der Sensor (1) oder Aktor zum Einsetzen in den Behälter (2) geeignet ist und wobei der Behälter (2) zur Aufnahme des Sensors (1) oder Aktors in seiner Wandung eine Öffnung und einen darin angeordneten Einschweißadapter (3) aufweist,
**dadurch gekennzeichnet,**
**dass** der Einschweißadapter (3) nach einem der vorherigen Ansprüche ausgebildet ist.

## Claims

1. Weld-in adapter for connecting a sensor (1) or actuator to a container (2) containing a medium, comprising a cylindrical through-opening (4) for receiving the sensor (1) or actuator and a transition region (3a) arranged concentrically around the through-opening (4), the outer edge region (3b) of which transition region is suitable for welding (6) to the container (2),
the through-opening (4) having, at one end, a circumferential sealing edge (5) which tapers the through-opening (4) and which is suitable as part of a sealing concept for the media-tight connection of the sensor (1) or actuator to the weld-in adapter (3),
**characterized in that**
the sealing edge (5) is parallel to the outer edge region (3b) of the transition region (3a), the sealing edge (5) is offset in relation to the outer edge region (3b) of the transition region (3a) by a distance, and the transition region (3a), which is located as a connecting element between the outer edge region (3b) and the sealing edge (5), has a curved structure with a pitch angle α to compensate for this offset.

2. Weld-in adapter according to claim 1,
**characterized in that** the sealing edge (5) protrudes in relation to the outer edge region (3b) of the transition region (3a).

3. Weld-in adapter according to claim 1,
**characterized in that** the sealing edge (5) is set back in relation to the outer edge region (3b) of the transition region (3a).

4. Weld-in adapter according to any of the preceding claims,
**characterized in that** the transition region (3a) has a lesser wall thickness in the region of the curved structure than at the outer edge region (3b) of the transition region.

5. Weld-in adapter according to any of the preceding claims,
**characterized in that** the weld-in adapter (3) is suitable for flush mounting of the sensor (1) or actuator.

6. Weld-in adapter according to any of the preceding claims,
**characterized in that** the pitch angle α is between 30° and 50°.

7. Weld-in adapter according to any of the preceding claims,
**characterized in that** the face facing the container inner face (2a) comprises a surface structure which allows the weld-in adapter (3) to be used in hygienic applications.

8. Arrangement consisting of a sensor (1) or actuator and a container (2) containing a medium, the sensor (1) or actuator being suitable for insertion into the container (2) and the container (2) having, for receiving the sensor (1) or actuator, an opening in its wall and a weld-in adapter (3) arranged therein,
**characterized in that**
the weld-in adapter (3) is designed according to any of the preceding claims.

## Revendications

1. Adaptateur à souder pour la liaison d'un capteur (1) ou d'un actionneur à un récipient (2) contenant un fluide, comportant une ouverture de passage (4) cylindrique permettant la réception du capteur (1) ou de l'actionneur et une zone de transition (3a) disposée de manière concentrique autour de l'ouverture de passage (4), dont la zone marginale extérieure (3b) est appropriée pour le soudage (6) au récipient (2), dans lequel l'ouverture de passage (4) présente à une extrémité un bord d'étanchéité (5) circonférentiel qui rétrécit l'ouverture de passage (4) et qui est appropriée, en tant que partie d'un concept d'étanchéité, pour la liaison étanche au fluide du capteur (1) ou de l'actionneur à l'adaptateur à souder (3), **caractérisé en ce**
**que** le bord d'étanchéité (5) est parallèle à la zone marginale extérieure (3b) de la zone de transition (3a), le bord d'étanchéité (5) est décalé d'une distance par rapport à la zone marginale extérieure (3b) de la zone de transition (3a) et la zone de transition (3a), qui se trouve comme élément de liaison entre la zone marginale extérieure (3b) et le bord d'étanchéité (5), présente, pour permettre de compenser ledit décalage, une structure bombée avec un angle d'attaque α.

2. Adaptateur à souder selon la revendication 1, **caractérisé en ce que** le bord d'étanchéité (5) fait saillie par rapport à la zone marginale extérieure (3b) de la zone de transition (3a).

3. Adaptateur à souder selon la revendication 1, **caractérisé en ce que** le bord d'étanchéité (5) est en retrait par rapport à la zone marginale extérieure (3b) de la zone de transition (3a).

4. Adaptateur à souder selon l'une des revendications précédentes, **caractérisé en ce que** la zone de transition (3a) présente une épaisseur de paroi plus faible dans la zone de la structure bombée que sur sa zone marginale extérieure (3b).

5. Adaptateur à souder selon l'une des revendications précédentes, **caractérisé en ce que** l'adaptateur à souder (3) est approprié au montage à affleurement frontal du capteur (1) ou de l'actionneur.

6. Adaptateur à souder selon l'une des revendications précédentes, **caractérisé en ce que** l'angle d'attaque α est compris entre 30° et 50°.

7. Adaptateur à souder selon l'une des revendications précédentes, **caractérisé en ce que** le côté tourné vers le côté intérieur de récipient (2a) présente une structure de surface qui permet l'utilisation de l'adaptateur à souder (3) dans des applications hygiéniques.

8. Agencement constitué d'un capteur (1) ou d'un actionneur et d'un récipient (2) contenant un fluide, dans lequel le capteur (1) ou l'actionneur est approprié pour être inséré dans le récipient (2) et dans lequel le récipient (2) présente, pour la réception du capteur (1) ou de l'actionneur, une ouverture dans sa paroi et un adaptateur à souder (3) disposé dans celle-ci,
**caractérisé en ce**
**que** l'adaptateur à souder (3) est réalisé selon l'une des revendications précédentes.
